# EUROPÄISCHE PATENTSCHRIFT

(11) **EP 3 921 213 B1**
(45) Veröffentlichungstag und Bekanntmachung des Hinweises auf die Patenterteilung: **03.08.2022**
(21) Anmeldenummer: 21720185.4
(22) Anmeldetag: 14.04.2021
(51) Int. Cl.: B60W 20/10, B60W 30/188, B60W 50/08, B60W 50/14, B60W 40/09

(54) **VERFAHREN ZUR AUSGABE VON EMPFEHLUNGEN ZUM ENERGIEEFFIZIENTEN BEDIENEN EINES FAHRZEUGS DURCH EIN VOM FAHRZEUG UMFASSTES ASSISTENZSYSTEM**
METHOD FOR OUTPUTTING RECOMMENDATIONS FOR THE ENERGY-EFFICIENT OPERATION OF A VEHICLE BY MEANS OF AN ASSISTANCE SYSTEM COMPRISED BY THE VEHICLE
PROCÉDÉ D'ÉMISSION DE RECOMMANDATIONS POUR LE FONCTIONNEMENT ÉNERGÉTIQUEMENT EFFICACE D'UN VÉHICULE AU MOYEN D'UN SYSTÈME D'ASSISTANCE COMPRIS DANS LE VÉHICULE

(30) Priorität: 22.04.2020 DE 102020110866
(43) Veröffentlichungstag der Anmeldung: 15.12.2021
(73) Patentinhaber: Mercedes-Benz Group AG, 70372 Stuttgart (DE)
(72) Erfinder: PETERS, Steven, 71701 Schwieberdingen (DE); PAETZOLD, Reiner, 73037 Göppingen (DE); BOTSCHEN, Teresa, 75382 Althengstett (DE); SCHMITT, Alexander, 71069 Sindelfingen (DE); NEBEL, Frank, 70197 Stuttgart (DE); ULTES, Stefan, 71263 Weil der Stadt (DE); MAIER, Wolfgang, 72072 Tübingen (DE); KREUZ, Ingo, 71134 Aidlingen-Dachtel (DE)
(74) Vertreter: JENSEN & SON
(86) Internationale Anmeldenummer: PCT/EP2021/059627
(87) Internationale Veröffentlichungsnummer: WO 2021/213855

(56) Entgegenhaltungen:
- EP-A1- 1 589 211
- EP-A1- 3 412 534
- US-A1- 2016 272 220

## Beschreibung

Die Erfindung betrifft Verfahren zur Ausgabe von Empfehlungen zum energieeffizienten Bedienen eines Fahrzeugs nach der im Oberbegriff von Anspruch 1 näher definierten Art, ein Assistenzsystem nach der im Oberbegriff von Anspruch 8 näher definierten Art sowie ein Fahrzeug mit einem solchen Assistenzsystem nach der im Oberbegriff von Anspruch 9 näher definierten Art.

Assistenzsysteme und Verfahren zur Ausgabe von Informationen mit Hilfe eines von einem Fahrzeug umfassten Fahrerassistenzsystems sind generell aus dem Stand der Technik bekannt. Der Umfang von einem solchen System ausgegebener Informationen reicht von Komfortfunktionen, wie das Ausgeben von Routeninformationen in einem Navigationssystem oder Restaurantempfehlungen, über Zustandsinformationen über das Fahrzeug wie beispielsweise eine Begründung, warum eine Stopp/Start Automatik nicht aktiv ist, bis zum Ausgeben von Warnungen zur Erhöhung der Fahrsicherheit, wie beispielsweise dem Ausgeben einer Abstandskollisionswarnung.

Heutzutage ist es aufgrund der Klimaerwärmung und der Knappheit natürlicher Ressourcen immer wichtiger, nachhaltig zu leben. Hierzu wird bereits in der Fahrschule gelehrt, vorausschauend zu fahren, wodurch in der Regel der Kraftstoffverbrauch beim Führen eines Fahrzeugs reduziert werden kann. Mit der Zeit entwickelt jedoch jede fahrzeugführende Person einen individuellen Fahrstil, der im Falle einer sportlichen oder auch einer ungeschickten Fahrweise jedoch mit einem erhöhten Spritverbrauch einhergeht. Dies bedingt die Notwendigkeit erfahrene fahrzeugführende Personen für eine bewusste Fahrweise zu sensibilisieren, um klimaschädliche Verhaltensmuster abzutrainieren.

Außerdem wird ein großer Hebel zur Reduktion von Treibhausgasen in der Elektrifizierung der Mobilität gesehen. Zur energieeffizienten Fortbewegung mit einem Elektrofahrzeug oder einem Hybridfahrzeug werden jedoch im Vergleich zu einem klassischen Verbrennungsmotor andere Anforderungen an die Steuerung eines solchen Fahrzeugs gestellt. Oftmals fehlt es einer fahrzeugführenden Person an Wissen, zu welchen Fahrsituationen ein Elektromotor Vorteile gegenüber einem Verbrennungsmotor liefert, wie bei einem Hybridfahrzeug der Elektromotor und der Verbrennungsmotor zusammenspielen, oder wie ein Fahrzeug besonders energieeffizient gesteuert werden kann.

Die DE 10 2019 001 445 A1 offenbart ein Informationssystem eines Fahrzeugs, ein Fahrzeug sowie ein Verfahren zur Information von Passagieren eines Fahrzeugs. Dabei umfasst das Fahrzeug eine Planungseinheit zum Treffen von Entscheidungen zur autonomen Steuerung des Fahrzeugs. Die Planungseinheit gibt Gründe zur Wahl der getroffenen Entscheidungen zur Steuerung des Fahrzeugs über ein Informationsausgabemodul in menschenverständlicher Form aus. Damit wird die Akzeptanz von autonom fahrenden Fahrzeugen erhöht und die Notwendigkeit manueller Eingriffe zur Steuerung des Fahrzeugs von einer fahrzeugführenden Person reduziert. Die Patentschrift liefert somit jedoch keinen Hinweis, eine fahrzeugführende Person für eine bewusstere Fahrweise zu sensibilisieren.

Der vorliegenden Erfindung liegt die Aufgabe zugrunde, mit Hilfe eines von Fahrzeug umfassten Assistenzsystems eine bewusstere Fahrweise einer fahrzeugführenden Person zu erzielen.

Die EP 3 412 534 A1 offenbart ein Verfahren zur Verbesserung der Fahrerwahrnehmung, wobei eine Anzahl von Ereignissen berechnet wird, bei denen ein aktueller Wert einer Motordrehzahl oder einer aktuellen Fahrzeuggeschwindigkeit ein Kraftstoffeinsparungsziel überschreitet. Sobald die Anzahl der Ereignisse einen vorgegebenen Schwellwert überschreitet, wird eine Information an einen Nutzer ausgegeben.

Die US 2016/272220 A1 beschreibt ein Hybrid-Fahrzeug, das zwischen der Anzeige einer Kraftstoffeffizienz und einer Elektrizitätseffizienz basierend auf der Verbrennungsmotornutzungshistorie umschaltet, wenn ein ausgewählter Betriebsmodus ein "Charge Depleting" Modus ist. In diesem Modus wird dem Betrieb unter ausschließlicher Verwendung des Elektromotors bei gestopptem Verbrennungsmotor eine hohe Priorität gegeben. Eine Häufigkeit eines Betriebsmoduswechsels wird zur Bestimmung einer Aktivierungsdauer des Verbrennungsmotors genutzt.

Die EP 1 589 211 A1 offenbart ein Verfahren zur Erkennung des Kraftstoffeinsparungseffekts eines automatischen Motorstopps und eine Erkennung der Lebensdauer der Motorstarteinrichtung. Die abgespeicherte Anzahl der Motorstopps wird mit einem Schwellwert verglichen, wobei mit Überschreitung des Schwellwerts eine Lebensdauer der Motorstarteinrichtung aufgebraucht ist und eine Information an einen Nutzer ausgegeben wird.

Erfindungsgemäß wird diese Aufgabe von einem Verfahren zur Ausgabe von Empfehlungen zum energieeffizienten Bedienen eines Fahrzeugs mit den Merkmalen des Anspruchs 1, einem Assistenzsystem mit den Merkmalen des Anspruchs 8 sowie einem Fahrzeug mit einem solchen Assistenzsystem mit den Merkmalen des Anspruchs 9 gelöst. Vorteilhafte Ausgestaltungen und Weiterbildungen ergeben sich aus den hiervon abhängigen Ansprüchen.

Ein Verfahren zur Ausgabe von Empfehlungen zum energieeffizienten Bedienen eines Fahrzeugs, wobei das Fahrzeug wenigstens zwei Betriebsmodi aufweist, von denen jeweils ein Betriebsmodus von einer Antriebssteuerung in Abhängigkeit des Auftretens festgelegter Trigger zum Betreiben des Fahrzeugs ausgewählt wird, umfasst erfindungsgemäß die folgenden Verfahrensschritte:
- Überwachung einer Fahrsituation mit vom Fahrzeug umfassten Sensoren;
- Bestimmung eines durch einen durch eine Fahrsituation oder ein Fahrverhalten einer fahrzeugführenden Person bewirkten Trigger ausgelösten Betriebsmoduswechsels,
- Hochzählen einer Häufigkeit des Betriebsmoduswechsels bei jeder Bestimmung des durch den Trigger ausgelösten Betriebsmoduswechsels,
- Analyse der Häufigkeit; wobei
- die Häufigkeit des Betriebsmoduswechsels mit einem vorgegebenen Wert verglichen wird; und
- fallabhängig und abhängig vom Ergebnis des Vergleichs eine Nachricht (6) zum Betriebsmoduswechsel erzeugt wird; und
- die Nachricht (6) über wenigstens ein vom Fahrzeug umfasstes Ausgabemittel (7) ausgegeben wird.

Mit Hilfe des Verfahrens lässt sich eine fahrzeugführende Person für eine bewusste Fahrweise sensibilisieren. Das Fahrzeug kann beispielsweise folgende Betriebsmodi umfassen: Segeln, Rekuperieren, Ausschalten eines Motors durch ein Stopp/Start System, Lastpunktverschiebung, Batterieladen, Boosten, usw. Die Nachricht zum Betriebsmoduswechsel ist damit als eine Nachricht zu einer Kategorie eines vorab beispielhaft genannten Betriebsmoduswechsels zu verstehen. Während des Betriebs des Fahrzeugs überwachen Sensoren eine aktuelle und/oder zukünftige Fahrsituation. Hierzu wird beispielsweise ein Abstand zwischen dem Fahrzeug und Objekten oder dem Fahrzeug vorausfahrenden Fahrzeugen, eine Fahrzeuggeschwindigkeit oder der von der fahrzeugführenden Person auf ein Gas- und/oder Bremspedal ausgeübter Druck erfasst. Generell umfasst das Fahrzeug eine Vielzahl von Sensoren, die weitere Merkmale überwachen. Auf eine detaillierte Aufzählung wird an dieser Stelle verzichtet, da sie zur Ausführung der Erfindung nicht notwendig ist. Für ein Fahrzeug sind eine Vielzahl von Triggern definiert, die durch eine von Sensoren erfasste Über- oder Unterschreitung von vorprogrammierten Triggerwerten erkannt werden. Hierbei handelt es sich beispielsweise um eine Abstandswarnung, eine Gaspedalstellung, eine Bremspedalstellung, eine Außentemperatur oder dergleichen. Die Trigger sind als Ereignisse bzw. Zustände zu verstehen, die eine Änderung des Fahrzustandes charakterisieren und einen Betriebsmoduswechsel auslösen. Die als Ereignis zu verstehenden Trigger betreffen im vorliegenden Kontext Fahrzustände oder Änderungen der Fahrzustände, die durch Erreichen vorgegebener Triggerwerte mittels Sensoren erkannt werden. Ein Trigger kann auch ein Betriebsmoduswechsel unterdrücken, weil beispielsweise ein Ereignis wie ein Reinigungsprozessprozess eines Abgasfilters läuft. Die Triggerwerte sind als Schwellen von Sensorsignalen zu verstehen, bei deren Über- oder Unterschreitung ein Betriebsmoduswechsel ausgelöst wird. Dabei kann für die Triggerwerte eine Hysterese vorgesehen sein, d.h. beispielsweise bei Erreichen eines ersten Triggerwertes wird von einem ersten in einen zweiten Betriebsmodus gewechselt, der Wechsel zurück von dem zweiten in den ersten Betriebsmodus erfolgt bei einem zweiten Triggerwert, dessen Wert kleiner als der des ersten Triggerwertes ist. Für jeden potenziellen Trigger oder jede potenzielle Triggerkombination umfasst das Fahrzeug eine feste Zuordnung, welcher Betriebsmodus in Abhängigkeit des oder der Trigger gewählt wird, das heißt, welcher aktive Betriebsmodus beendet und welcher neuer Betriebsmodus aktiviert wird. Durch das Hochzählen einer Häufigkeit des Betriebsmoduswechsels, der dem für den Betriebsmoduswechsel verantwortlichen Trigger zugeordnet ist, lässt sich die Fahrweise mit der das Fahrzeug gesteuert wird charakterisieren. Die Fahrweise wird beispielsweise von einem als Eco-Coach bezeichneten Programm analysiert, wodurch eine am besten geeignete, personalisierte individuelle Empfehlung zum Anpassen der Fahrweise der fahrzeugführenden Person gemacht wird. Dabei ist ein Teil der Empfehlungen auszugeben, wenn die Häufigkeit der Betriebsmoduswechsel gering ist, und ein Teil der Empfehlungen auszugeben, wenn die Häufigkeit der Betriebsmoduswechsel hoch ist. Hierzu werden die Häufigkeiten bzw. die Häufigkeitswerte der Betriebsmoduswechsel mit je einem vorgegeben Wert verglichen, und fallabhängig die Empfehlung d.h. in Abhängigkeit der Art der Betriebsmoduswechsel und dem Ergebnis des Vergleichs d.h. die Häufigkeit ist geringer, gleich oder größer als der jeweilige vorgegebene Wert, erstellt.

Erfindungsgemäß sieht das Verfahren vor, dass ein neues Nutzerprofil angelegt oder ein bestehendes Nutzerprofil ausgewählt werden kann, wobei in den Nutzerprofilen die Häufigkeit der Betriebsmoduswechsel, die jeweils dem zuletzt aktiven Betriebsmodus und/oder dem gewählten Betriebsmodus und dem zum Wechsel führenden Trigger zugeordnet sind, in einem Datenfeld gespeichert werden.

Dabei wird ein Nutzerprofil insbesondere in Form einer Matrix gespeichert, wobei die Spalten der Matrix die Betriebsmodi des Fahrzeugs und die Zeilen der Matrix potentielle Trigger umfassen, und die einzelnen, die Häufigkeit der Betriebsmoduswechsel kennzeichenden Matrixwerte beim Erzeugen der Matrix mit einem Wert von 0 initialisiert werden. Ferner wird bei jedem Betriebsmoduswechsel wenigstens ein Matrixwert bestimmt, dessen Spalte dem zuletzt aktiven Betriebsmodus und/oder dem gewählten Betriebsmodus entspricht und dessen Zeile dem zum Wechsel des Betriebsmodus führenden Trigger entspricht. Dem oder den von den Matrixwerten umfassten Wert wird ein Wert von 1 hinzuaddiert.

Durch den Einsatz von Nutzerprofilen lässt sich die Fahrweise mit der das Fahrzeug gesteuert wird gezielt einem bestimmten Nutzer zuordnen. Das Erstellen und Verwenden mehrerer Nutzerprofile erlaubt es auf das Verhalten von Personen individuell einzugehen, wenn sich diese das Fahrzeug teilen. Dadurch kann auf bestimmte Zielgruppen eingegangen werden, wie beispielsweise Privatpersonen oder den Einsatz des Fahrzeugs als Mietwagen. Eine Ausgestaltung der Nutzerprofile als Matrix stellt zudem eine einfache und zweckmäßige Umsetzung zum Verfolgen der Häufigkeit der Zuordnung der Trigger zu den jeweiligen Betriebsmodi, für deren Wechsel sie verantwortlich waren, dar. Eine weitere vorteilhafte Ausgestaltung des Verfahrens sieht vor, dass die Nachricht zu dem Betriebsmoduswelchsel wenigstens eines der folgenden Elemente umfasst:
- eine Information über den aktuell gewählten Betriebsmodus;
- einen Grund, warum der aktuelle Betriebsmodus gewählt wurde; und/oder
- eine Empfehlung zum energieeffizienten Bedienen des Fahrzeugs.

Durch das Umfassen der genannten Elemente von der Nachricht kann eine fahrzeugführende Person besonders effektiv auf eine bewusste Fahrweise hingewiesen werden, da die fahrzeugführende Person auf den Zusammenhang zwischen dem Grund zum Betriebsmoduswechsel und der Auswirkung auf den Energieverbrauch des Fahrzeugs hingewiesen wird.

Entsprechend einer weiteren vorteilhaften Ausgestaltung des Verfahrens erfolgt die Ausgabe der Nachricht visuell, akustisch, und/oder haptisch, wobei das wenigstens eine vom Fahrzeug umfasste Ausgabemittel als Anzeigegerät und/oder Lautsprecher ausgebildet ist; und,
wenn die Ausgabe der Nachricht visuell erfolgt, die Nachricht wenigstens eine Grafik und/oder einen Text umfasst; und
wenn die Ausgabe der Nachricht akustisch erfolgt, die Nachricht wenigstens einen Ton und/oder einen Text umfasst; wobei
der Text aus vorgefertigten Textbausteinen zusammengesetzt ist oder von einem Text-to-Speech System mit Hilfe eines Text-Composer-Ansatzes generiert ist. Das Ausgeben einer visuellen Nachricht ermöglicht es, neben der Ausgabe eines informativen Textes auch Grafiken darzustellen, beispielsweise Symbole oder Graphen zum Visualisieren von Informationen. Hierdurch kann insbesondere das Verständnis der ausgegebenen Nachricht verbessert werden. Das Ausgeben einer akustischen Nachricht erlaubt es der fahrzeugführenden Person, ihren Blick weiter dem Verkehrsgeschehen zu widmen, da sie zum Wahrnehmen der Nachricht nicht auf ein visuelles Ausgabemittel schauen muss, wodurch die allgemeine Sicherheit im Straßenverkehr vergrößert werden kann, dadurch, dass die fahrzeugführende Person dem Fahrgesehen eine erhöhte Aufmerksamkeit widmen kann. Besonders vorteilhaft werden eine akustische und visuelle Nachricht gleichzeitig ausgegeben. So kann die fahrzeugführende Person beispielsweise die Nachricht hören, während eine weitere im Fahrzeug befindliche Person, beispielsweise ein Beifahrer, die Nachricht visuell aufnehmen kann und hierdurch beispielsweise durch das Erfassen von Symbolen oder Graphen zusätzliche Informationen aufnehmen kann. Ein Zusammensetzen der Nachricht aus vorgefertigten Textbausteinen stellt einen besonders einfachen und leicht umsetzbaren Ansatz dar, um die Nachricht zu erzeugen.

Mit Hilfe eines Text-Composer-Ansatzes generierter Nachrichten können insbesondere komplexer und abwechslungsreicher gestaltet werden, wodurch die fahrzeugführende Person ein länger andauerndes Interesse an dem Verfahren ausbilden kann.

Eine vorteilhafte Weiterbildung des Verfahrens sieht vor, dass die Ausgabe der Nachricht aktiviert und deaktiviert werden kann, wobei eine selbstständige Deaktivierung bestimmter Nachrichten trainiert wird, indem eine Beziehung zwischen dem Deaktivieren der Ausgabe und dem Inhalt der Nachricht hergestellt wird. Beispielsweise bei
einem eingeschaltetem Eco-Coach kann die Ausgabe der Nachricht durch die Betätigung eines Knopfes und/oder einen Sprachbefehl aktiviert und deaktiviert werden, wobei der Eco-Coach lernfähig ist und trainiert wird, selbstständig das Ausgeben bestimmter Nachrichten zu Verhindern.

Es kann vorkommen, dass die mit Hilfe des Verfahrens ausgegebene Nachrichten von der fahrzeugführenden Person als trivial oder störend empfunden werden, insbesondere in dem Fall, dass die fahrzeugführende Person dieselbe oder eine ähnliche Nachricht mehrmals wahrgenommen hat. In diesem Fall wird es der fahrzeugführenden Person durch das Drücken eines Knopfes oder Ausgeben eines Sprachbefehls besonders leicht ermöglicht, die Ausgabe der Nachrichten zu verhindern. Der Komfort in der Benutzung des Verfahrens kann weiter gesteigert werden, indem der Eco-Coach selbstständig lernt, entsprechend der Vorlieben der fahrzeugführenden Person bestimmte Nachrichten zu unterdrücken. Hierzu kann der Eco-Coach beispielsweise auch künstliche Intelligenz umfassen. Für diesen Fall wird ein Netzwerk des Eco-Coaches unter verschiedensten Umgebungsbedingungen und mit unterschiedlichen Nutzern kontinuierlich eingelernt, so dass der Eco-Coach nach einer Einlernphase nutzerabhängig eine gewünschte Unterdrückung antizipieren und selbst umsetzen kann.

Entsprechend einer weiteren vorteilhaften Ausgestaltung des Verfahrens sind die aktuellen in den Matrixelementen vorliegenden Werte, beispielsweise durch Betätigen eines Löschknopfes, oder wenn ein Kunde einer Datenverarbeitung nicht mehr zustimmt, zurücksetzbar, insbesondere auf den ursprünglich bei der Erstellung der Matrix gewählten Initialwert.

Hierdurch kann das Benutzerprofil adaptiv ausgeführt werden, was dazu führt, dass durch das Zurücksetzen der Werte der Matrixelemente bestimmte Nachrichten immer wieder erneut ausgegeben werden können. Dies ist insbesondere vorteilhaft, wenn es sich bei dem Fahrzeug um einen Mietwagen handelt. So kann bei jedem Fahrerwechsel die Matrix zurückgesetzt werden, wodurch jeder neue Fahrer die Möglichkeit erhält, eine entsprechende Nachricht wahrzunehmen.

Eine weitere vorteilhafte Ausgestaltung des Verfahrens sieht vor, dass in Abhängigkeit des Nutzerprofils für jedes einen Betriebsmoduswechsel charakterisierende Datenfeld derselbe vorgegebene Wert gilt oder einen der nachfolgenden individuellen Werte aufweist;
insbesondere:
- ein fester vorgegebener Wert von 1;
- ein fester beliebiger vorgegebener Wert, der vom Fahrzeughersteller vor Ausliefern des Fahrzeugs vorgegeben wurde;
- ein variabler vorgegebener Wert, wobei sich der Wert des variablen vorgegebenen Wertes mit einer beliebigen Frequenz ändern kann, insbesondere durch eine Übertragung an das Fahrzeug von einer fahrzeugexternen zentralen Recheneinheit, wobei die Datenübertragung insbesondere über eine Schnittstelle zur drahtlosen Datenübertragung oder eine Schnittstelle zur kabelgebundenen Datenübertragung erfolgt.

Durch Verwenden eines ersten vorgegebenen Wertes in Abhängigkeit des Nutzerprofils lässt sich die Ausgabe von Nachrichten individuell an verschiedene Nutzer anpassen. Durch die Wahl eines festen vorgegebenen Wertes von 1 wird sichergestellt, dass ein neuer Nutzer des Fahrzeugs direkt zu Beginn des Verwendens des Fahrzeugs Nachrichten zur bewussten Betriebsweise des Fahrzeugs empfängt. Es kann jedoch sinnvoll sein, das Verhalten eines Nutzers über einen längeren Zeitraum zu analysieren und erst dann Nachrichten auszugeben, wenn ein spezielles Verhalten besonders oft vorliegt, beispielsweise ein Segelabbruch durch einen zu geringen Abstand zu einem vorausfahrenden Fahrzeug. Hierbei kann der Fahrzeughersteller für jeweils ein beliebiges Datenfeld auch mehrere feste beliebige vorgegebene Werte festlegen, sodass die Ausgabe einer Nachricht für einen speziellen triggerabhängigen Betriebsmoduswechsel mehrmals erfolgt, beispielsweise wenn der spezielle Fall fünfmal, zwanzigmal und einhundertmal aufgetreten ist. Außerdem ist es möglich, dass der vorgegebene Wert variabel ausgeführt ist, was bedeutet, dass er während der Lebensdauer des Fahrzeugs mehrmals zu beliebigen Zeitpunkten geändert werden kann. Zur Änderung des nun variablen vorgegebenen Wertes kann das Fahrzeug von einer externen zentralen Recheneinheit Daten empfangen, insbesondere über Funk oder kabelgebunden, beispielsweise während eines Werkstattaufenthalts.

Bevorzugt in Abhängigkeit der Ausstattung des Fahrzeugs und/oder des typischen Lastprofils des Fahrzeugs aus einem anonymisierten, eine Fahrzeugflotte beschreibenden Datensatz eine Vielzahl von Vergleichsfahrzeugen ausgewählt wird und
die Häufigkeit der durch die Trigger ausgelösten Betriebsmoduswechsel mit der Häufigkeit der Betriebsmoduswechsel eines oder mehrerer Vergleichsfahrzeuge verglichen wird. Die an den Fahrzeugnutzer gerichtet Nachricht umfasst eine Analyse, die Unterschiede der Häufigkeiten der Betriebsmoduswechsel zwischen dem eigenen Fahrzeug und den Vergleichsfahrzeugen umfasst.

Dies erlaubt eine effektive Analyse des Nutzerverhaltens der fahrzeugführenden Person, indem als repräsentative Vergleichsfahrzeuge beispielsweise die effizientesten 10 Prozent der Fahrzeugflotte ausgewählt werden, oder ein gemittelter Wert erstellt wird. Der auf der Häufigkeit der Betriebsmoduswechsel dieser Vergleichsfahrzeuge beruhende Wert wird mit dem im Nutzerprofil der fahrzeugführenden Person gespeicherten Häufigkeit verglichen. Dabei können mit der Analyse Ähnlichkeiten und Unterschiede festgestellt werden, mit deren Hilfe eine besonders wirksame Empfehlung generiert wird, die die fahrzeugführende Person für eine effiziente Fahrweise trainiert und/oder motiviert. Der fahrzeugführenden Person wird insbesondere aufgezeigt, welches Potential er gegenüber den repräsentativen Vergleichsfahrzeugen er noch hat. Die repräsentativen Fahrzeuge umfassen Fahrzeuge der gleichen Marke, des gleichen Typs oder zumindest Fahrzeug mit der gleichen Funktionalität wie beispielsweise eine Start-Stop- oder Segelfunktion. Die Art der repräsentativen Fahrzeuge kann vom Nutzer ausgewählt oder automatisch bestimmt werden. Darüber hinaus kann dementsprechend eine Fahrerkategorie berücksichtigt werden, beispielsweise Alter, sparsamer Fahrer oder sportlicher Fahrer. Vorzugsweise findet der Vergleich mit einer Flotte desselben Fahrprofils statt, d.h. Fahrzeugen beispielsweise im Stadt-, Land- oder Autobahnverkehr. In vorteilhafter Weise findet der Vergleich nur bereichsweise statt, d.h. das Ego-Fahrzeug wird nur mit Fahrzeugen einer Flotte verglichen, die dieselbe Strecke oder einen Streckenabschnitt gefahren sind. Die Vergleichsdaten werden dann vorzugsweise nur für diese von Ego- und Vergleichsfahrzeugen befahrene Strecke- oder Streckenabschnitt erhoben. Insbesondere können die vorgegebenen Werte, die mit den Häufigkeiten der Betriebsmoduswechsel der vorzugsweise in dem Nutzerprofil der fahrzeugführenden Person verglichen werden, an die von den Flottenfahrzeugen ermittelte Werte für die Häufigkeit der Betriebmoduswechsel manuell und/oder automatisch angepasst werden.

Ein Assistenzsystem mit einer Recheneinheit, vorzugsweise umfassend das Programm Eco-Coach, wenigstens einem akustischen und/oder visuellen Ausgabemittel, einer Datenverbindung zwischen der Recheneinheit, einer Antriebssteuerung, wobei die Antriebssteuerung eine Betriebs-, und/oder Antriebsstrategie umfasst, vom Fahrzeug umfasste Sensoren und einem Bediensystem ist erfindungsgemäß eingerichtet, ein Verfahren zur Ausgabe von Empfehlungen zum energieeffizienten Bedienen eines Fahrzeugs durchzuführen. Des Weiteren umfasst das Fahrzeug vorzugsweise eine Schnittstelle zur Datenübertragung mit einer fahrzeugexternen zentralen Recheneinheit.

Ein Fahrzeug umfasst wenigstens eine Antriebseinheit zum Antreiben des Fahrzeugs, wobei die Antriebseinheit wenigstens einen Verbrennungsmotor und/oder wenigstens einen Elektromotor umfasst. Erfindungsgemäß weist das Fahrzeug ein Assistenzsystem auf, das eingerichtet ist, ein Verfahren zur Ausgabe von Empfehlungen zum energieeffizienten Bedienen eines Fahrzeugs durchzuführen. Somit kann das vom Assistenzsystem durchgeführte Verfahren sowohl bei einem Fahrzeug, das einen klassischen Verbrennungsmotor aufweist, einen Elektromotor aufweist oder bei einem Hybridfahrzeug, durchgeführt werden.

Weitere vorteilhafte Ausgestaltungen des erfindungsgemäßen Verfahrens ergeben sich auch aus dem Ausführungsbeispiel, welches nachfolgend unter Bezugnahme auf die Figuren näher beschrieben wird.

Dabei zeigen:
- Fig. 1: einen Vorgang zum Wechseln eines Betriebsmodus, mit dem ein Fahrzeug gesteuert wird;
- Fig. 2: Nutzerprofile in Form von Matrizen;
- Fig. 3: ein Ablaufdiagramm eines Verfahrens zur Ausgabe von Empfehlungen zum energieeffizienten Bedienen eines Fahrzeugs; und
- Fig. 4: ein Assistenzsystem zur Durchführung des Verfahrens.

Ein Fahrzeug weist wenigstens zwei Betriebsmodi auf, von denen jeweils ein Betriebsmodus 1 von einer Antriebssteuerung 15 in Abhängigkeit des Auftretens festgelegter Trigger 2 zum Betreiben des Fahrzeugs ausgewählt wird. Bei den vorab definierten Betriebsmodi bzw. Betriebsstrategien kann es sich beispielsweise um wenigstens eine der folgenden Kategorien handeln: Segeln, Rekuperieren, Ausschalten eines Motors durch eine Stopp/Start Automatik, Lastpunktverschiebung, Batterieladen, Boosten oder eine beliebige weitere übliche Betriebsstrategie für ein Fahrzeug. Bei denen von der Antriebssteuerung 15 erkannten Triggern kann es sich beispielsweise um eine Abstandswarnung, eine Gas- oder Bremspedalstellung, eine Temperatur, beispielsweise eine Umgebungstemperatur oder Öltemperatur, oder dergleichen handeln. Umfasst das Fahrzeug einen Verbrennungsmotor, so ist die Antriebssteuerung insbesondere als Motorsteuerung ausgeführt. Folgende sechs Beispiele dienen der Veranschaulichung:
- Beispiel 1: Ein Hybridfahrzeug beschleunigt auf einem Beschleunigungsstreifen zum Auffahren auf eine Autobahn. Dabei tritt eine fahrzeugführende Person das Gaspedal stark durch, wodurch die Antriebssteuerung in einen Betriebsmodus wechselt, bei dem ein vom Hybridfahrzeug umfasster Elektromotor einen ebenfalls vom Hybridfahrzeug umfassten Verbrennungsmotor beim Beschleunigen unterstützt.
- Beispiel 2: Ein Hybridfahrzeug fährt mit konstanter Geschwindigkeit. Dabei wechselt die Antriebssteuerung 15 in einen Betriebsmodus, bei dem eine Lastpunktverschiebung so durchgeführt wird, dass der Verbrennungsmotor in seinem effizientesten Bereich arbeitet.
- Beispiel 3: Ein Elektrofahrzeug fährt mit konstanter Geschwindigkeit auf einer abschüssigen Fahrbahn. In diesem Falle verbraucht ein vom Elektrofahrzeug umfasster Elektromotor keinen Strom zum Aufrechterhalten der Fahrgeschwindigkeit. Dies wird als Segeln bezeichnet. Vor dem Elektrofahrzeug fährt ein weiteres Fahrzeug, welches abbremst, wodurch ein Abstand zwischen den Fahrzeugen einen Mindestabstand unterschreitet, wodurch das Elektrofahrzeug abbremsen muss. Die Antriebssteuerung 15 wechselt nun den Betriebsmodus von: "Segeln" zu: "Rekuperieren", um die im Bremsvorgang anfallende Energie zurückzugewinnen.
- Beispiel 4: Ein Fahrzeug mit Verbrennungsmotor steht an einer Ampel. Obwohl das Fahrzeug eine Start-Stopp Automatik umfasst, wird der Motor des Fahrzeugs nicht abgeschaltet, da gerade ein Motordiagnoseprogramm läuft.
- Beispiel 5: Kurze wiederholte Gasstöße vom Kunden, die keine Beschleunigung erzielen, sondern nur den Spritverbrauch steigern.
- Beispiel 6: Ein Fahrzeug mit Verbrennungsmotor segelt, indem der Verbrennungsmotor mittels eine Kupplung vom Triebstrang abgekoppelt und abgeschaltet wird. Durch zu geringen Abstand zum Vordermann oder durch betätigen der Bremse wird der Betriebsmodus gewechselt und der Segelvorgang abgebrochen, der Motor gestartet und Treibstoff verbraucht, der durch vorausschauender Fahrweise hätte eingespart werden können.

Diese Beispiele repräsentieren spezielle Fälle bei denen ein bestimmter Trigger, d.h. ein Fahrzustand oder ein Fahrzustandswechsel einen bestimmten Betriebsmodus oder einen Betriebsmoduswechsel bedingt. Hierauf aufbauend wird mit Hilfe des Verfahrens eine individuelle Empfehlung zum bewussten Bedienen des Fahrzeugs generiert. An späterer Stelle werden für die genannten Beispiele entsprechende Empfehlungen aufgelistet.

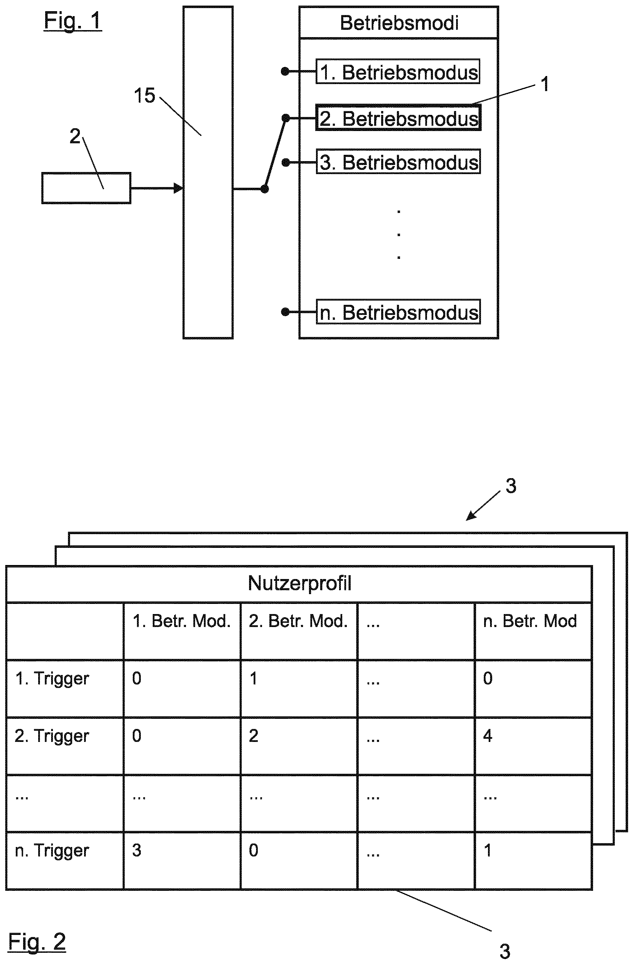

Figur 2 zeigt eine beim Erstellen eines Nutzerprofils erzeugte Matrix 3. Die Häufigkeiten der Betriebsmoduswechsel werden in der Matrix als Matrixwerte abgebildet. Die Spalten der Matrix 3 umfassen die vom Fahrzeug umfassten Betriebsmodi bzw. Betriebsstrategien, wobei die Zeilen der Matrix 3 die vordefinierten Trigger wie beispielsweise Bremsbetätigung, Gaswegnahme, Abstandsunterschreitung zum Wechsel des Betriebsmodus umfassen. Bei Erstellen eines neuen Nutzerprofils werden die einzelnen, jeweils eine Häufigkeit der Betriebsmoduswechsel charakterisierenden Matrixwerte mit einem Wert von 0 gefüllt. Wird aufgrund einer Fahrsituation oder eines Fahrverhaltens einer fahrzeugführenden Person ein Triggerwert erreicht, d.h. beispielsweise über- oder unterschritten, wird dies von der Antriebssteuerung 15 festgestellt, wodurch der Betriebsmodus gewechselt wird. Daraufhin wird ein Matrixelement bestimmt, indem die entsprechende Zeile, die den aufgetretenen Trigger umfasst, sowie die entsprechenden Spalte der Matrix, die den beendeten oder den Betriebsmodus zu dem gewechselt wurde umfasst, ausgewählt. Dem von diesem Matrixelement umfassten Matrixwert wird ein Wert von 1 hinzuaddiert. Mit fortschreitender Betriebsdauer des Fahrzeugs nehmen die die Betriebsmoduswechsel zählenden Matrixwerte somit zu. Dabei ist es möglich, dass diese permanent anwachsen oder durch ein bestimmtes Ereignis auf ihren ursprünglichen Wert zurückgesetzt werden können. Dies kann beispielsweise ein Nutzerbefehl, eine festgelegte Zeitdauer, in der der Motor ausgeschaltet ist, ein Wechsel des Nutzerprofils oder das Empfangen eines von einer fahrzeugexternen zentralen Recheneinheit übermittelten Datenstroms sein. Generell ist es möglich ein Zurücksetzen der Matrixwerte durch ein beliebiges weiteres, nicht näher definiertes Ereignis durchzuführen und/oder durch ein "Fading" die von den Matrixwerte über die Zeit kontinuierlich zu reduzieren, bis sie ihrem jeweiligen Initialwert entsprechen, wobei das Fading beispielsweise durch einen erneuten Anstieg des Matrixwertes unterbrochen werden kann.

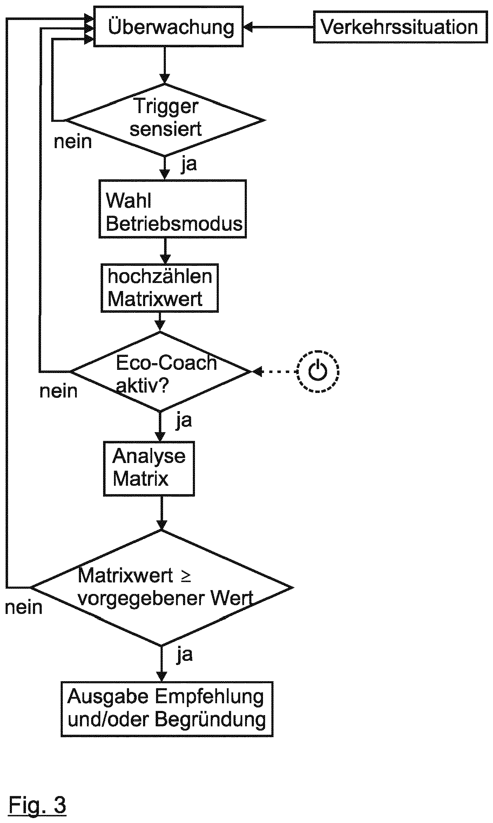

Bei dem in Figur 3 dargestellten Ablaufdiagramm analysiert ein Fahrzeug permanent die aktuelle oder unmittelbare Verkehrssituation, bei der Ereignissen bzw. Trigger durch eine Überwachung von der Antriebsstrategie oder Antriebssteuerung 15 sensiert werden, wodurch die Antriebssteuerung 15 den Betriebsmodus des Fahrzeugs wechselt. Erfasst die Antriebssteuerung 15 keinen Trigger, d.h. wird kein Triggerwert erreicht, führt sie weiter die Überwachung durch. Hat ein Betriebsmoduswechsel nach Erreichen eines Triggerwertes stattgefunden, wird ein Trigger sensiert und ein entsprechendes Matrixwert hochgezählt. Für den Fall, dass ein vom Fahrzeug umfasster Eco-Coach, bei dem es sich um einen von einer Recheneinheit 5 umfasstes Programm handelt, eingeschaltet ist, erfolgt eine Analyse der Matrix. Dabei wird jeder Matrixwert mit einem für das jeweilige Matrixelement, d.h. für den betreffenden Betriebsmoduswechsel geltenden vorgegebenen Wert verglichen und für den Fall, dass der aktuelle Matrixwert den jeweiligen vorgegebenen Wert überschreitet, erfolgt die Ausgabe einer Nachricht an die fahrzeugführende Person mit einer Empfehlung zum energieeffizienten Bedienen des Fahrzeugs, eine Information über den aktuell gewählten Betriebsmodus und/oder einem Grund, warum der aktuelle Betriebsmodus gewählt wurde bzw. ein Betriebsmoduswechsel stattgefunden hat. Ist der Eco-Coach nicht aktiv, lässt er sich mit Hilfe eines Kopfdrucks und/oder eines Sprachbefehls einschalten.

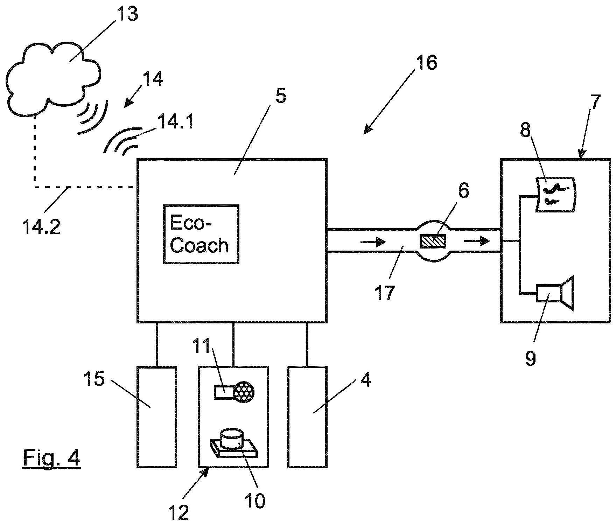

Ein in Figur 4 dargestelltes Assistenzsystem 16 weist die Recheneinheit 5 auf, die das Programm mit dem Namen Eco-Coach umfasst. Der Eco-Coach dient wie bereits erwähnt zur Analyse der Matrix, die das Nutzerprofil mit den jeweiligen Häufigkeiten der Betriebsmoduwechsel umfasst. Die Recheneinheit 5 weist eine Schnittstelle zur Datenübertragung 14 auf, über die Daten mit einer fahrzeugexternen zentralen Recheneinheit 13 ausgetauscht werden können. Die Schnittstelle ist dabei insbesondere als Schnittstelle zur drahtlosen Datenübertragung 14.1 oder Schnittstelle zur kabelgebundenen Datenübertragung 14.2 ausgebildet. Ferner weist die Recheneinheit 5 eine Datenverbindung zur Antriebssteuerung 15, einem Bediensystem 12 und vom Fahrzeug umfassten Sensoren 4 auf. Das Bediensystem 12 wiederum umfasst wenigstens ein Mikrofon 11 zur Detektion von Sprachbefehlen sowie wenigstens einen Knopf 10, der als physischer Knopf an einer beliebigen Stelle im Fahrzeug angeordnet sein kann, oder als virtueller Knopf von einem Anzeigegerät des Fahrzeugs, beispielsweise einem Kombiinstrument oder einer Head-Unit, umfasst sein kann. Mit Hilfe des Knopfes 10 und/oder des Mikrofons 11 lässt sich der Eco-Coach ein- und ausschalten. Ferner weist die Recheneinheit 5 eine Datenverbindung, beispielsweise in Form eines Datenbusses 17, auf, mit dem von der Recheneinheit 5 erzeugte Nachrichten 6 an ein vom Fahrzeug umfasstes Ausgabemittel 7 weitergeleitet werden. Die Nachrichten 6 umfassen insbesondere einen Text, der entweder aus Textbausteinen zusammengesetzt wurde oder mit Hilfe eines Textcomposeransatzes generiert wurde. Ferner weist die Nachricht 6 optional weitere Informationen auf. Die Nachricht 6 wird anschließend visuell auf einem Anzeigegerät 8 und/oder akustisch mit Hilfe eines Lautsprechers 9 wiedergegeben. Die akustische Wiedergabe kann dabei mit Hilfe eines Text-to-Speech Systems erfolgen. Rückbezogen auf die bereits eingeführten vier Beispiele könnte die Nachricht folgendermaßen lauten:
- Beispiel 1: "Bei dieser Autobahnauffahrt konnte der E-Antrieb unterstützen, sodass trotz dem starken Beschleunigen wenig Kraftstoff verbraucht wurde." Ergänzend lässt sich auf einem visuellen Ausgabemittel eine Grafik, beispielsweise eine Verbrauchs- und Ladekurve, anzeigen.
- Beispiel 2: "Durch eine Lastpunktverschiebung wird in dieser Situation jetzt bei gleicher Geschwindigkeit Energie gespart, da der Motor in seinem effizientesten Bereich arbeitet."
- Beispiel 3: "Hier war nun das Segeln etwas ungünstig, da schon nach kurzer Zeit der Vordermann im Radar auftauchte und gebremst werden musste, um den Sicherheitsabstand einzuhalten. Die Energie ging aber durch die Rekuperation größtenteils zurück in die Batterie."
- Beispiel 4: "Trotz Gaswegnahme konnte hier der Motor nicht abgeschaltet werden, da gerade ein Motordiagnoseprogramm läuft."
- Beispiel 5: "Extrem kurze Gasstöße führen zu keiner Beschleunigung, lassen aber den Verbrauch merklich ansteigen. "
- Beispiel 6: "Durch Halten eines größeren Abstandes und Vermeidung der Betätigung des Bremspedals kann der Streckenanteil am Segeln erhöht und Sprit gespart werden."

## Patentansprüche

1. Verfahren zur Ausgabe von Empfehlungen zum energieeffizienten Bedienen eines Fahrzeugs, wobei
das Fahrzeug wenigstens zwei Betriebsmodi aufweist, von denen jeweils ein Betriebsmodus (1) von einer Antriebssteuerung (15) in Abhängigkeit von festgelegten Triggern (2) zum Betreiben des Fahrzeugs ausgewählt wird,
mit den folgenden Verfahrensschritten:
- Bestimmung eines durch einen durch eine Fahrsituation oder ein Fahrverhalten einer fahrzeugführenden Person bewirkten Trigger (2) ausgelösten Betriebsmoduswechsels,
- Hochzählen einer Häufigkeit des Betriebsmoduswechsels bei jeder Bestimmung des durch den Trigger ausgelösten Betriebsmoduswechsels,
- Analyse der Häufigkeit; wobei
- die Häufigkeit des Betriebsmoduswechsels mit einem vorgegebenen Wert verglichen wird; und
- abhängig von der Art des Betriebmoduswechsels und vom Ergebnis des Vergleichs eine Nachricht (6) zu dem Betriebsmoduswechsel erzeugt wird; und
- die Nachricht (6) über wenigstens ein vom Fahrzeug umfasstes Ausgabemittel (7) ausgegeben wird
**dadurch gekennzeichnet, dass** in einem Nutzerprofil die Häufigkeit des Betriebsmoduswechsels dem zuletzt aktiven Betriebsmodus und/ oder dem gewählten Betriebsmodus (1) und dem zum Wechsel führenden Trigger zugeordnet in einem Datenfeld gespeichert wird.

2. Verfahren nach Anspruch 1,
**dadurch gekennzeichnet, dass**
die Nachricht (6) zu dem Betriebsmoduswechsel wenigstens eines der folgenden Elemente umfasst:
eine Information über den aktuell gewählten Betriebsmodus (1);
einen Grund, warum der aktuelle Betriebsmodus (1) gewählt wurde; und/oder
eine Empfehlung zum energieeffizienten Bedienen des Fahrzeugs.

3. Verfahren nach Anspruch 1 oder 2 ,
**dadurch gekennzeichnet, dass**
die Ausgabe der Nachricht (6) visuell, akustisch und/oder haptisch erfolgt, wobei das wenigstens eine vom Fahrzeug umfasste Ausgabemittel (7) als Anzeigegerät (8), Lautsprecher (9) und/oder Lenkrad, ausgebildet ist; und
wenn die Ausgabe der Nachricht (6) visuell erfolgt, die Nachricht (6) wenigstens eine Grafik und/oder einen Text umfasst; und
wenn die Ausgabe der Nachricht (6) akustisch erfolgt, die Nachricht (6) wenigstens einen Ton und/oder einen Text umfasst; wobei
der Text aus vorgefertigten Textbausteinen zusammengesetzt ist oder von einem Text-to-Speech System mit Hilfe eines Text-Composer-Ansatzes generiert ist.

4. Verfahren nach einem der Ansprüche 1 bis 3,
**dadurch gekennzeichnet, dass**
die Ausgabe der Nachricht (6) aktiviert und deaktiviert werden kann, wobei eine selbstständige Deaktivierung bestimmter Nachrichten trainiert wird, indem eine Beziehung zwischen dem Deaktivieren der Ausgabe und dem Inhalt der Nachricht (6) hergestellt wird.

5. Verfahren nach einem der Ansprüche 1 bis 4,
**dadurch gekennzeichnet, dass**
die in dem Nutzerprofil vorliegenden Werte zurücksetzbar sind.

6. Verfahren nach einem der Ansprüche 1 bis 5,
**dadurch gekennzeichnet, dass**
in Abhängigkeit des Nutzerprofils jedes Datenfeld den selben vorgegebene Wert oder einen der nachfolgenden individuellen vorgegebenen Werte aufweist:
- ein fester vorgegebener Wert von 1;
- ein fester beliebiger vorgegebener Wert, der vom Fahrzeughersteller vor Ausliefern des Fahrzeugs vorgegeben wurde;
- ein variabler vorgegebener Wert; wobei sich der Wert des variablen vorgegebenen Wertes mit einer beliebigen Frequenz ändern kann, insbesondere durch eine Übertragung an das Fahrzeug von einer fahrzeugexternen zentralen Recheneinheit (13), wobei die Datenübertragung insbesondere über eine Schnittstelle zur drahtlosen Datenübertragung (14.1) oder eine Schnittstelle zur kabelgebundenen Datenübertragung (14.2) erfolgt.

7. Verfahren nach einem der Ansprüche 1 bis 6,
**dadurch gekennzeichnet, dass**
in Abhängigkeit einer Ausstattung des Fahrzeugs und/oder eines typischen Lastprofils des Fahrzeugs aus einem anonymisierten, eine Fahrzeugflotte beschreibenden Datensatz ein oder mehrere Vergleichsfahrzeuge ausgewählt werden und
die Häufigkeit der durch die Trigger ausgelösten Betriebsmoduswechsel mit der Häufigkeit der Betriebsmoduswechsel des einen oder der mehreren Vergleichsfahrzeuge verglichen wird, und die erzeugte Nachricht (6) eine Analyse, die Unterschiede der Häufigkeiten der Betriebsmoduswechsel zwischen dem eigenen Fahrzeug und dem oder den Vergleichsfahrzeugen umfasst.

8. Assistenzsystem (16) mit,
- einer Recheneinheit (5);
- wenigstens einem akustischen und/oder visuellen Ausgabemittel (7);
- einer Datenverbindung zwischen der Recheneinheit (5), einer Antriebssteuerung (15), vom Fahrzeug umfassten Sensoren (4) und einem Bediensystem (12);
**dadurch gekennzeichnet, dass**
das Assistenzsystem (16) eingerichtet ist ein Verfahren nach einem der vorhergehenden Ansprüche durchzuführen.

9. Fahrzeug, wobei
das Fahrzeug eine Antriebseinheit zum Antreiben des Fahrzeugs aufweist, und die Antriebseinheit wenigstens einen Verbrennungsmotor und/oder wenigstens einen Elektromotor umfasst,
**dadurch gekennzeichnet, dass**
das Fahrzeug außerdem ein Assistenzsystem (16) nach Anspruch 8 umfasst.

## Claims

1. Method for outputting recommendations for the energy-efficient operation of a vehicle, wherein
the vehicle has at least two operating modes, of which one operating mode (1) is in each case selected by a drive control (15) in dependence on fixed triggers (2) for operating the vehicle,
the method comprising the following procedural steps:
- the determination of an operating mode change triggered by a trigger (2) actuated by a driving situation or a driving behaviour of the person driving the vehicle,
- the incrementation of a frequency of the operating mode change at each determination of the operating mode change triggered by the trigger,
- the analysis of the frequency, wherein
- the frequency of the operating mode change is compared to a predetermined value; and
- a message (6) relating to the operating mode change is generated depending on the type of operating mode change and on the result of the comparison; and
- the message (6) is output via at least one output means (7) comprised by the vehicle,
**characterised in that**
the frequency of the operating mode change is stored in a user profile in a data array, being allocated to the operating mode last active and/or to the selected operating mode (1) and/or to the trigger causing the change.

2. Method according to claim 1,
**characterised in that**
the message (6) relating to the operating mode change comprises at least one of the following elements:
information about the currently selected operating mode (1);
a reason for the selection of the current operating mode (1); and/or
a recommendation for the energy-efficient operation of the vehicle.

3. Method according to claim 1 or 2,
**characterised in that**
the message (6) is output visually, audibly and/or haptically, wherein the at least one output means (7) comprised by the vehicle is designed as a display unit (8), a loudspeaker (9) and/or a steering wheel; and
if the message (6) is output visually, the message (6) comprises at least one graphic and/or a text; and
if the message (6) is output audibly, the message (6) comprises at least one sound and/or a text; wherein
the text is composed of ready-made text modules or generated by a text-to-speech system using a text composer approach.

4. Method according to any of claims 1 to 3,
**characterised in that**
the output of the message (6) can be activated or deactivated, wherein an independent deactivation of certain messages is trained by establishing a relationship between the deactivation of the output and the content of the message (6).

5. Method according to any of claims 1 to 4,
**characterised in that**
the values present in the user profile are resettable.

6. Method according to any of claims 1 to 5,
**characterised in that**
depending on the user profile, each data array has the same predetermined value or one of the following individual predetermined values:
- a fixed predetermined value of 1;
- a fixed optional predetermined value predetermined by the vehicle manufacturer before the delivery of the vehicle;
- a variable predetermined value, wherein the value of the variable predetermined value can change with a discretionary frequency, in particular by a transmission to the vehicle from a vehicle-external central processing unit (13), wherein the data are in particular transmitted via an interface for wireless data transmission (14.1) and/or an interface for wired data transmission (14.2).

7. Method according to any of claims 1 to 6,
**characterised in that**
depending on a design of the vehicle and/or a typical load profile of the vehicle, one comparable vehicle or several comparable vehicles is/are selected from an anonymised data set describing a vehicle fleet and
the frequency of the operating mode changes triggered by the triggers is compared to the frequency of the operating mode changes of the one comparable vehicle or the several comparable vehicles, and the generated message (6) comprises an analysis of the differences in the frequencies of the operating mode changes between the own vehicle and the comparable vehicle(s).

8. Assistance system (16) comprising
- a processing unit (5);
- at least one audible and/or visual output means (7);
- a data link between the processing unit (5), a drive control (15), sensors (4) comprised by the vehicle and an operating system (12);
**characterised in that**
the assistance system (16) is arranged to carry out a method according to any of the preceding claims.

9. Vehicle, wherein
the vehicle has a drive unit for driving the vehicle and the drive unit comprises at least one internal combustion engine and/or at least one electric motor,
**characterised in that**
the vehicle additionally comprises an assistance system (16) according to claim 8.

## Revendications

1. Procédé de sortie de recommandations destinées à l'utilisation économe en carburant d'un véhicule, dans lequel
le véhicule présente au moins deux modes de fonctionnement, parmi lesquels un mode de fonctionnement (1) est respectivement sélectionné par une commande d'entraînement (15) en fonction de déclencheurs définis (2) pour faire fonctionner le véhicule,
le procédé comprenant les étapes suivantes :
- déterminer un changement de mode de fonctionnement déclenché par un déclencheur (2) provoqué par un comportement d'une personne conduisant le véhicule à moteur ou par une situation de conduite,
- compter une fréquence du changement de mode de fonctionnement à chaque détermination du changement de mode de fonctionnement déclenché par le déclencheur,
- analyser la fréquence ; dans lequel
- la fréquence du changement de mode de fonctionnement est comparée à une valeur prédéfinie ; et
- en fonction du type du changement de mode de fonctionnement et du résultat de la comparaison un message (6) relatif au changement de mode de fonctionnement est généré ;
et (
- le message (6) est délivré par au moins un moyen de sortie (7) situé à bord du véhicule,
**caractérisé en ce que**
dans un profil d'utilisateur, la fréquence du changement de mode de fonctionnement associée au dernier mode de fonctionnement activé et/ou au mode de fonctionnement sélectionné (1) et au déclencheur provoquant le changement est enregistrée dans un champ de données.

2. Procédé selon la revendication 1,
**caractérisé en ce que**
le message (6) relatif au changement de mode de fonctionnement comprend au moins un des éléments suivants :
une information concernant le mode de fonctionnement actuellement sélectionné (1) ;
une raison pour laquelle le mode de fonctionnement actuel (1) a été sélectionné ; et/ou
une recommandation pour une utilisation économe en carburant du véhicule.

3. Procédé selon la revendication 1 ou 2,
**caractérisé en ce que**
la sortie du message (6) s'effectue de manière visuelle, acoustique et/ou haptique, dans lequel l'au moins un moyen de sortie (7) situé à bord du véhicule est conçu sous la forme d'un dispositif d'affichage (8), d'un haut- parleur (9) et/ou d'un volant de direction ; et
lorsque la sortie du message (6) s'effectue visuellement, le message (6) comprend au moins un graphique et/ou un texte ; et
lorsque la sortie du message (6) s'effectue acoustiquement, le message (6) comprend au moins un son et/ou un texte ;
le texte étant composé de modules de textes préfabriquées ou étant généré à partir d'un synthétiseur de la parole à partir du texte à l'aide d'une approche de composeuse de texte.

4. Procédé selon l'une quelconque des revendications 1 à 3,
**caractérisé en ce que** la sortie du message (6) peut être activée ou désactivée, dans lequel une désactivation automatique de certains messages est entraînée, par génération d'une relation entre la désactivation de la sortie et le contenu du message (6).

5. Procédé selon l'une quelconque des revendications 1 à 4,
**caractérisé en ce que** les valeurs préexistantes dans le profil d'utilisateur peuvent être réinitialisées.

6. Procédé selon l'une quelconque des revendications 1 à 5,
**caractérisé en ce que**
en fonction du profil d'utilisateur, chaque champ de données présente la même valeur prédéfinie ou l'une des valeurs prédéfinies individuelles suivantes :
une valeur prédéfinie fixe de 1 ;
une quelconque valeur prédéfinie fixe qui a été prédéfinie par le fabricant du véhicule avant la livraison du véhicule ;
une valeur prédéfinie variable, la valeur de la valeur prédéfinie variable peut être changée par une quelconque fréquence, notamment par transfert au véhicule par une unité de calcul (13) centrale externe au véhicule, le transfert de données s'effectuant notamment par l'intermédiaire d'une interface servant au transfert de données sans fil (14.1) ou par l'intermédiaire d'une interface servant au transfert de données filaire (14.2).

7. Procédé selon l'une quelconque des revendications 1 à 6,
**caractérisé en ce que**
en fonction d'un équipement du véhicule et/ou d'un profil de charge typique du véhicule un ou plusieurs véhicules de comparaison sont sélectionnés à partir d'un jeu de données décrivant une flotte de véhicules rendue et
la fréquence du changement de mode de fonctionnement déclenché par le déclencheur est comparée à la fréquence du changement de mode de fonctionnement de l'un ou de plusieurs véhicules de comparaison, et le message (6) généré comprend une analyse, les différences des fréquences du changement de mode de fonctionnement entre le propre véhicule et le ou les véhicules de comparaison.

8. Système d'aide (16) comprenant
- une unité de calcul (5) ;
- - au moins un moyen de sortie (7) visuel et/ou acoustique ;
- une liaison de données entre l'unité de calcul (5), une commande d'entraînement (15), des capteurs (4) situés à bord du véhicule et un système de commande (12) ;
**caractérisé en ce que**
le système d'aide (16) est conçu pour exécuter un procédé selon l'une quelconque des revendications précédentes.

9. Véhicule, dans lequel
le véhicule présente une unité d'entraînement pour entraîner le véhicule et l'unité d'entraînement comprenant au moins un moteur à combustion interne et/ou au moins un moteur électrique,
**caractérisé en ce que**
le véhicule comporte en outre un système d'aide (16) selon la revendication 8.
